# EUROPEAN PATENT SPECIFICATION

(11) **EP 4 176 704 B1**
(45) Date of publication and mention of the grant of the patent: **01.04.2026**
(21) Application number: 22205557.6
(22) Date of filing: 04.11.2022
(51) Int. Cl.: A01D 46/30, A01D 46/24

(54) **CROP OPERATING DEVICE**
ERNTEBETRIEBSVORRICHTUNG
DISPOSITIF POUR LA RÉCOLTE DE LA CULTURE

(30) Priority: 09.11.2021 JP 2021182695
(43) Date of publication of application: 10.05.2023
(73) Proprietor: Yanmar Holdings Co., Ltd., Osaka-shi, Osaka (JP)
(72) Inventor: YOKOUE, Toshiyuki, Osaka (JP); KUGA, Toru, Osaka (JP); SAIKI, Miyuki, Osaka (JP)
(74) Representative: Sekiguchi, Kazuya

(56) References cited:
- EP-A1- 3 725 148
- WO-A1-2016/055552
- WO-A1-2017/152224
- WO-A1-2020/005064
- CN-B- 110 383 988
- JP-A- 2021 023 164

## Description

### TECHNICAL FIELD

The present invention relates to a crop operating device that operates crops (fruit vegetables or fruits) (e.g., cuts stalks of fruits when harvesting).

### BACKGROUND ART

There is known a fruit vegetable harvesting device for harvesting fruit vegetables from branches. Patent Document 1 discloses a fruit vegetable harvesting device that harvests a fruit vegetable by holding the fruit vegetable by using a suction hand and separating the fruit vegetable from an abscission zone by using a finger portion approaching a stalk. Patent Document 2 discloses a fruit and vegetable harvesting device including a harvesting hand and a robot arm. Patent Document 3 relates to an apple picker comprising a rack cylinder, a cutting mechanism and a puller mechanism, and Patent Document 4 discloses a fruit vegetable separation device comprising a separation mechanism.

### PRIOR ART DOCUMENT

### PATENT DOCUMENT

Patent Document 1: JP-A-2020-184936
Patent Document 2: EP 3725148 A1
Patent Document 3: CN 110383988 B
Patent Document 4: JP 2021-023164 A

### SUMMARY OF INVENTION

### TECHNICAL PROBLEM

The fruit vegetable harvesting device in Patent Document 1 uses an advance and retreat mechanism including a rack and a pinion in order to cause the finger portion to approach a stalk. There has been a problem that such a fruit vegetable harvesting device cannot sufficiently handle variations in shape and holding posture of fruit vegetables.

That is, because the advance and retreat mechanism is configured as a rack and pinion mechanism, advance and retreat of the finger portion is limited to linear movement. Therefore, the finger portion cannot sufficiently fit a fruit vegetable depending on a size or posture of the fruit vegetable and thus may damage the fruit vegetable to be harvested or a part therearound or may not be sufficiently positioned near the fruit vegetable, which cannot achieve the desired performance. The finger portion that only moves linearly cannot handle a difference in size and unevenness of fruit vegetables, which cannot handle fruit vegetables of various conditions.

The present invention has been made in view of the above problems, and an object thereof is to provide a crop operating device capable of appropriately operating crops (fruit vegetables or fruits) without being affected by variations in shape or holding posture of the crops.

### SOLUTION TO PROBLEM

In order to solve the above problem, a crop operating device of the present invention includes: an operating tool that operates a crop; a crop holding mechanism that holds the crop; and an advance and retreat mechanism that advances and retracts the operating tool to and from the crop held by the crop holding mechanism, in which the operating tool is held to be rotatable with respect to the advance and retreat mechanism.

According to the above configuration, the advance and retreat mechanism can not only advance and retreat the operating tool but also rotate the operating tool. Therefore, when the operating tool is brought close to the crop, the operating tool can be rotated along a surface of the crop. This makes it possible to operate the operating tool at an appropriate position with respect to the crop.

Moreover, the crop operating device further includes a drive unit that drives the advance and retreat mechanism and the operating tool, wherein the drive unit includes a plurality of drums having different diameters and fixed to a same drive shaft.

Moreover, the crop operating device may be configured such that the advance and retreat mechanism includes an extendable arm unit to which the operating tool is attached.

Moreover, the crop operating device may be configured such that the arm unit is supported to be rotatable with respect to a frame member of the advance and retreat mechanism, and the crop operating device may be configured to further include an arm rotation control unit that restricts rotation of the arm unit at an initial stage in which the arm unit starts to extend and allows the rotation of the arm unit as the arm unit extends.

According to the above configuration, the advance and retreat mechanism can perform not only an extension and contraction operation of the arm unit but also a rotation operation of the arm unit. The rotation operation of the arm unit makes it possible to appropriately bring the operating tool into contact with the crop when bringing the operating tool close to the crop.

Moreover, the crop operating device may be configured to further include an elastic member that biases the arm unit in a rotation direction in which the operating tool is relatively brought close to the crop with respect to the arm unit.

According to the above configuration, it is possible to reliably perform the rotation operation of the arm unit, regardless of a posture of the crop operating device in use.

Moreover, the crop operating device may be configured such that the arm unit includes a plurality of divided arms.

Moreover, the crop operating device may be configured such that a first divided arm that is located at a head of the divided arms when the arm unit extends holds the operating tool so that the operating tool is rotatable, and a drum connected to the operating tool via a belt and a drum connected to the first divided arm via a belt have different drum diameters.

According to the above configuration, it is possible to perform the rotation operation of the operating tool with a simple configuration using a difference in amount of movement between the two belts.

Moreover, the crop operating device may be configured to further include a load reduction unit including a leaf spring of which one end portion is fixed to the operating tool or the divided arm and another end portion serving as a free end has a protrusion protruding toward the belt.

Moreover, the crop operating device may be configured such that the load reduction unit has: a fitting groove formed in the belt and having a shape fittable into the protrusion; and a relief groove formed adjacent to the fitting groove so as to extend in a longitudinal direction of the belt and having a groove width smaller than a width dimension of the protrusion.

According to the above configuration, in a case where, after the operating tool abuts on a target, the drum is further rotated to push out the belt, the protrusion of the leaf spring is relieved from the fitting groove to the relief groove. This makes it possible to reduce the load applied to the crop, the operating tool, and the divided arms, and also to prevent the cutting mechanism from being unnecessarily inclined.

Moreover, the crop operating device may be configured such that the operating tool is a cutting mechanism that cuts a stalk of the crop, and the cutting mechanism includes scissors having a pair of cutting blades of which blade portions are arranged to face each other.

According to the above configuration, the stalk of the crop can be cut by the cutting mechanism, and thus the crop operating device can be used for harvesting the crop.

Moreover, the crop operating device may be configured such that in the cutting mechanism, a biasing force for opening the scissors is applied by a spring, and a driving force for closing the scissors is transmitted via a wire member having a double structure including an outer wire and an inner wire.

According to the above configuration, a drive source for opening and closing the scissors does not need to be integrally provided with the cutting mechanism. Therefore, the cutting mechanism is reduced in size. This makes it possible to easily insert the cutting mechanism into dense fruit vegetables.

Moreover, the crop operating device may be configured such that a moving pulley is provided on one blade side of the scissors, and the inner wire is wound around the moving pulley, and a tip end of the inner wire is connected to another blade side of the scissors.

According to the above configuration, the driving force for closing the scissors can be reduced by using the moving pulley, and a thin wire having a small allowable stress can be used as the inner wire. The thin wire has a small minimum bending radius, and thus the cutting mechanism can be reduced in size.

Moreover, the crop operating device may be configured such that a blade cover is provided on the blade portions side of the scissors, and the blade cover covers surfaces, facing the crop, of the scissors.

According to the above configuration, when the cutting mechanism comes into contact with the crop, the blade cover can protect the crop from being damaged. In particular, when tip ends of the cutting mechanism have a shape like a ski board, it is possible to prevent the blades from stabbing the crop at the moment when the blades come into contact with the crop.

### ADVANTAGEOUS EFFECTS OF INVENTION

According to a crop operating device of the present invention, an advance and retreat mechanism that advances and retracts an operating tool to and from a target crop can perform a rotation operation of the operating tool at a tip end of the advance and retreat mechanism, and thus the operating tool fits along a surface of the crop. This makes it possible to operate the operating tool at an appropriate position (e.g., a position of the stalk closer to the fruit) with respect to the crop.

### BRIEF DESCRIPTION OF DRAWINGS

Fig. 1 illustrates an embodiment of the present invention and is a perspective view of an appearance of a fruit vegetable harvesting device;
Fig. 2 is a perspective view in which an internal structure of an advance and retreat mechanism can be visually recognized in the fruit vegetable harvesting device in Fig. 1;
Fig. 3 is a top view of the fruit vegetable harvesting device in Fig. 2;
Figs. 4A to 4C are explanatory diagrams of an operation of the fruit vegetable harvesting device at the time of harvesting a fruit vegetable;
Fig. 5 is an enlarged perspective view of an example of a load reduction unit;
Figs. 6A and 6B are explanatory diagrams of an action of the load reduction unit;
Figs. 7A to 7C are explanatory diagrams of an operation of the fruit vegetable harvesting device at the time of harvesting a fruit vegetable;
Fig. 8 is a perspective view of an appearance of a cutting mechanism;
Fig. 9 is a plan view of the cutting mechanism; and
Figs. 10A to 10C are explanatory diagrams of an operation of the cutting mechanism.

### DESCRIPTION OF EMBODIMENTS

### [First Embodiment]

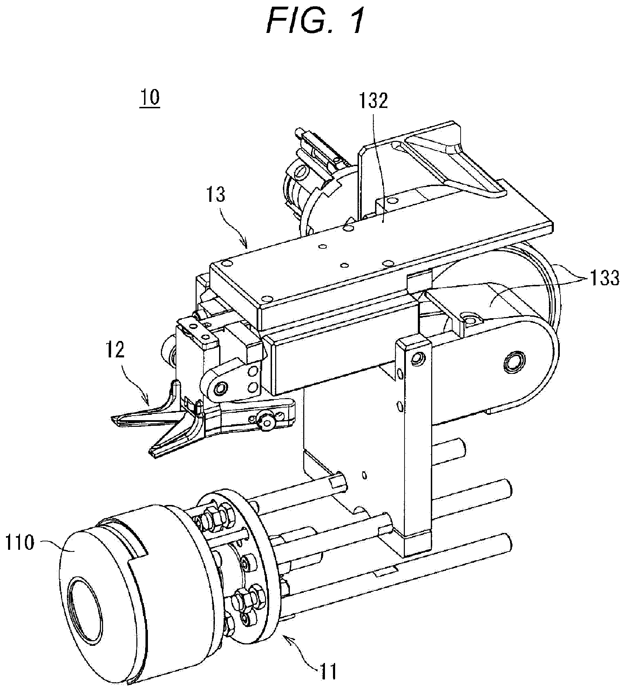

Hereinafter, embodiments of the present invention will be described in detail with reference to the drawings. First, a configuration of a crop operating device according to a first embodiment will be described. Fig. 1 is a perspective view of an appearance of a fruit vegetable harvesting device 10 that is an example of the crop operating device. The fruit vegetable harvesting device 10 in Fig. 1 is attached to a tip end of an arm or the like and is used as a fruit vegetable harvester in combination with a peripheral device such as a drive source or operation means. That is, crops to be operated in the crop operating device are fruit vegetables or fruits.

The fruit vegetable harvesting device 10 generally includes a fruit vegetable holding mechanism (crop holding mechanism) 11, a cutting mechanism (operating tool) 12, and an advance and retreat mechanism 13. **In** a basic posture of the fruit vegetable harvesting device 10 in use, the advance and retreat mechanism 13 is located above the fruit vegetable holding mechanism 11. Therefore, the upward and downward direction in the present specification is such that a direction in which the fruit vegetable holding mechanism 11 is located with respect to the advance and retreat mechanism 13 means a downward direction, and a direction opposite thereto means an upward direction.

The fruit vegetable holding mechanism **11** includes, at a tip end thereof, a suction pad **110** made from sponge or the like and thus can hold a fruit vegetable to be harvested, by sucking the fruit vegetable to the suction pad **110.** More specifically, the fruit vegetable holding mechanism 11 is connected to a vacuum generation device (not illustrated) or the like serving as a drive source via a hose (not illustrated) and sucks the fruit vegetable to the suction pad 110 by vacuum suction by the vacuum generation device. A fruit vegetable holding device that sucks and holds a fruit vegetable by vacuum suction is publicly known, and thus a detailed description of the fruit vegetable holding mechanism 11 is omitted here.

The cutting mechanism 12 cuts a stalk of a fruit vegetable to be harvested. A specific configuration of the cutting mechanism 12 will be described later. The advance and retreat mechanism 13 includes the cutting mechanism 12 at a tip end thereof and moves the cutting mechanism 12 to bring the cutting mechanism close to the stalk.

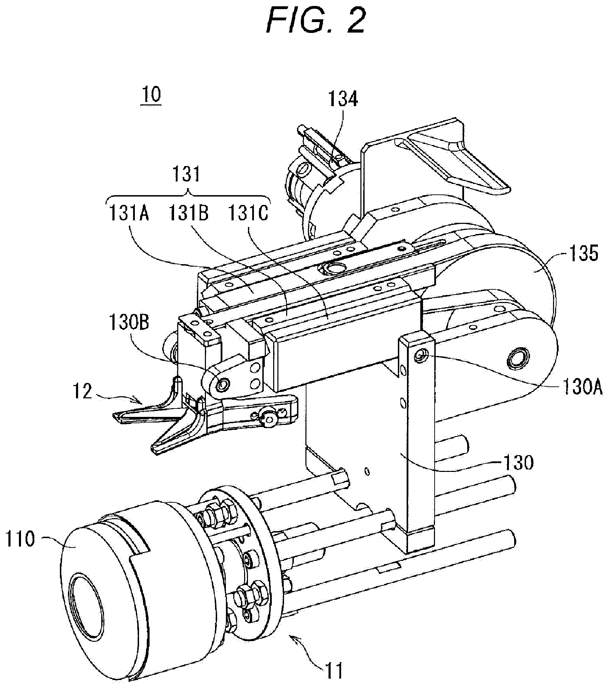

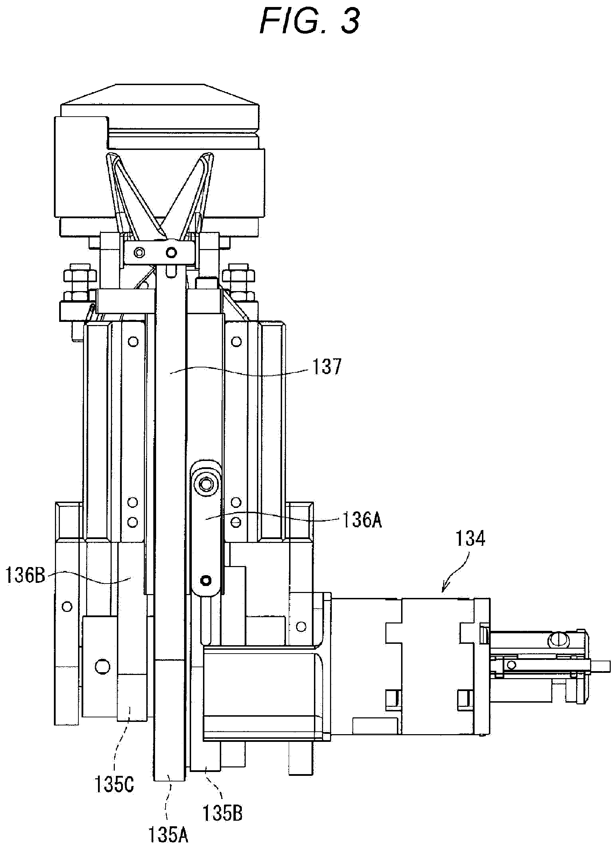

In the first embodiment, a characteristic configuration of the advance and retreat mechanism 13 will be described. Fig. 2 is a perspective view in which an arm cover 132 and a drum cover 133 of the advance and retreat mechanism 13 are removed from the fruit vegetable harvesting device 10 in Fig. 1 so that an internal structure of the advance and retreat mechanism 13 can be visually recognized. Fig. 3 is a top view of the fruit vegetable harvesting device 10 in Fig. 2.

As illustrated in Figs. 2 and 3, the advance and retreat mechanism 13 includes a plurality of divided arms, that is, an arm unit 131 including a first divided arm 131A, a second divided arm 131B, and a third divided arm 131C. In this example, the second divided arm 131B and the third divided arm 131C are slidable via a V groove. The first divided arm 131A is a bar-shaped rod member and is inserted into a groove provided in the second divided arm 131B, so as to be slidable.

Therefore, the first divided arm 131A can slide in the groove of the second divided arm 131B, and the second divided arm 131B can slide in the groove of the third divided arm 131C. As described above, the first divided arm 131A, the second divided arm 131B, and the third divided arm 131C form a telescopic mechanism, and thus the arm unit 131 can extend and contract in a forward and backward direction. The forward and backward direction in the present specification means a forward direction that is a direction approaching a held fruit vegetable and a backward direction that is a direction separating from the fruit vegetable. The telescopic mechanism in this example has three stages, but may have any number of stages as long as a plurality of stages is provided.

The third divided arm 131C does not move in the forward and backward direction, but can rotate about a first rotation shaft 130A with respect to a frame member 130 of the advance and retreat mechanism 13. The cutting mechanism 12 is attached to a tip end (forward end portion) of the first divided arm 131A so as to be rotatable about a second rotation shaft 130B.

The arm unit 131 is driven by a drive unit including a rotary actuator 134, a drum unit 135, a first belt 136A, and a second belt 136B and performs an extension and contraction operation. The rotary actuator 134 is an actuator that converts air pressure or hydraulic pressure into rotational motion, and is arranged at a position behind the arm unit 131. An electric motor or the like can be used instead of the rotary actuator 134.

As illustrated in Fig. 3, the drum unit 135 is configured such that three drums of a large-diameter drum 135A, a medium-diameter drum 135B, and a small-diameter drum 135C are concentrically arranged with respect to the same rotation axis. The large-diameter drum 135A has a relatively largest outer diameter among the three drums. The small-diameter drum 135C has a relatively smallest outer diameter among the three drums. The medium-diameter drum 135B has an outer diameter larger than that of the small-diameter drum 135C and smaller than that of the large-diameter drum 135A. In this example, the small-diameter drum 135C is arranged on the side opposite to the rotary actuator 134 with respect to the large-diameter drum 135A, and the medium-diameter drum 135B is arranged on the same side as the rotary actuator 134 with respect to the large-diameter drum 135A. However, the arrangement order of those drums is not particularly limited.

In the drum unit 135, when a drive shaft is rotationally driven in a forward direction or backward direction by the rotary actuator 134, the large-diameter drum 135A, the medium-diameter drum 135B, and the small-diameter drum 135C fixed to the drive shaft rotate forward or backward at equal rotational speed. The forward rotation in the present specification means rotation in a rotation direction when the arm unit 131 extends forward (in a counterclockwise direction in Fig. 2). The backward rotation means rotation in a rotation direction when the arm unit 131 contracts backward (in a clockwise direction in Fig. 2).

The first belt 136A drives sliding of the first divided arm 131A. The first belt 136A is wound around an outer peripheral surface of the medium-diameter drum 135B, and, although not illustrated in detail in the drawing, a longitudinal tip end portion thereof is fixed to a predetermined portion of the first divided arm 131A, and a longitudinal base end portion thereof is fixed to a predetermined portion of the outer peripheral surface of the medium-diameter drum 135B. The second belt 136B drives sliding of the second divided arm 131B. The second belt 136B is wound around an outer peripheral surface of the small-diameter drum 135C, and, although not illustrated in detail in the drawing, a longitudinal tip end portion of the second belt 136B is fixed to a predetermined portion of the second divided arm 131B, and a longitudinal base end portion of the second belt 136B is fixed to a predetermined portion of the outer peripheral surface of the small-diameter drum 135C.

The drive unit of the advance and retreat mechanism 13 further includes a cutting mechanism belt 137 for causing the cutting mechanism 12 to perform an inclination operation (for causing the operating tool to perform a rotation operation). The cutting mechanism belt 137 is wound around an outer peripheral surface of the large-diameter drum 135A, a longitudinal tip end portion of the cutting mechanism belt 137 is attached to the top of the cutting mechanism 12, and, although not illustrated in detail in the drawing, a longitudinal base end portion of the cutting mechanism belt 137 is fixed to a predetermined portion of the outer peripheral surface of the large-diameter drum 135A. The number of drums in the drum unit 135 and the number of belts connected to the drum unit 135 are changed according to the number of stages of the telescopic mechanism of the arm unit 131.

In the advance and retreat mechanism 13, when the drum unit 135 rotates forward, each belt wound around the corresponding drum is fed forward. At this time, the first divided arm 131A is pushed forward by feeding the first belt 136A, and the second divided arm 131B is pushed forward by feeding the second belt 136B. At this time, an amount of movement of the first divided arm 131A is larger than an amount of movement of the second divided arm 131B due to a difference in outer diameter between the medium-diameter drum 135B around which the first belt 136A is wound and the small-diameter drum 135C around which the second belt 136B is wound. That is, the arm unit 131 extends forward by the forward rotation of the drum unit 135. When the drum unit 135 rotates backward, the extended arm unit 131 is returned backward.

When the drum unit 135 rotates forward, the cutting mechanism belt 137 wound around the large-diameter drum 135A is also fed forward. At this time, an amount of feeding of the cutting mechanism belt 137 is larger than an amount of feeding of the first belt 136A due to a difference in outer diameter between the large-diameter drum 135A and the medium-diameter drum 135B. Further, because the cutting mechanism belt 137 is attached to the top of the cutting mechanism 12, the cutting mechanism 12 rotates about the second rotation shaft 130B due to a difference in amount of movement between the cutting mechanism belt 137 and the first belt 136A and thus is inclined to lower a tip end side of the cutting mechanism 12 (to bring the tip end side close to the suction pad 110).

In this example, the drum around which the cutting mechanism belt 137 is wound (i.e., the large-diameter drum 135A) has a larger drum diameter than the drum around which the first belt 136A is wound (i.e., the medium-diameter drum 135B). However, in order to perform rotation (inclination operation) of the cutting mechanism 12, it is only necessary that the amount of feeding of the cutting mechanism belt 137 and the amount of feeding of the first belt 136A be different from each other and also that drum diameters of the drum around which the cutting mechanism belt 137 is wound and the drum around which the first belt 136A is wound be different from each other. Specifically, even if the drum diameter of the drum around which the cutting mechanism belt 137 is wound is smaller than the drum diameter of the drum around which the first belt 136A is wound, it is possible to perform the inclination operation of the cutting mechanism 12 in a similar manner to this example as long as the cutting mechanism belt 137 is attached below the second rotation shaft 130B with respect to the cutting mechanism 12.

Each of the above belts is naturally flexible, and thus, when the belt is buckled when the drum unit 135 rotates forward, the extension and contraction operation of the arm unit 131 and the inclination operation of the cutting mechanism 12 cannot be normally performed. Therefore, as illustrated in Fig. 1, the advance and retreat mechanism 13 includes the arm cover 132 and the drum cover 133 for restraining buckling of the belts.

The arm cover 132 is a plate-shaped member having a rectangular shape in plan view and is arranged above each belt in a moving region of the arm unit 131 to restrain upward buckling of each belt. The arm cover 132 is attached to the second divided arm 131B and moves in the forward and backward direction together with the second divided arm 131B. The arm cover is not in contact with the first divided arm 131A or the third divided arm 131C so as not to hinder the extension and contraction operation of the arm unit 131. The drum cover 133 is arranged outside the drum unit 135 to restrain buckling of each belt wound around the drum unit 135.

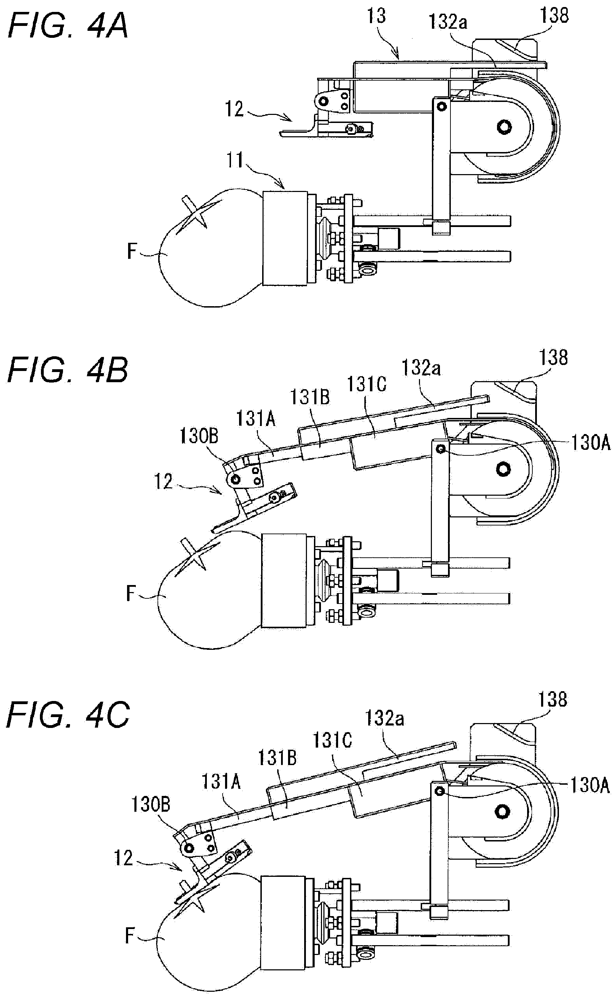

Next, an operation of the fruit vegetable harvesting device 10 at the time of harvesting a fruit vegetable will be described with reference to Figs. 4A to 4C.

Fig. 4A illustrates an initial position of the fruit vegetable harvesting device 10. In this state, a fruit vegetable F is sucked and held by the suction pad 110, and the advance and retreat mechanism 13 contracts the arm unit 131 to the shortest length. At this time, a tip end of the arm unit 131 is held above the fruit vegetable F by an arm rotation control unit including the arm cover 132 and a tail guide 138.

Here, a configuration and action of the arm rotation control unit will be described below. First, the arm cover 132 has a tail portion 132a extending backward further than a back end of the second divided arm 131B. The third divided arm 131C is connected to the frame member 130 via the first rotation shaft 130A, and thus the arm unit 131 can rotate about the first rotation shaft 130A. The tail guide 138 is a rail member that comes into contact with the tail portion 132a to control the rotation of the arm unit 131. Specifically, in the initial position in Fig. 4A, a back end portion of the tail guide 138 abuts on the tail portion 132a, and the rotation of the arm unit 131 is restricted at an initial stage in which the arm unit 131 starts to extend.

When the drum unit 135 is rotated forward from the initial position in Fig. 4A, the arm unit 131 extends accordingly. While the arm unit 131 is extending, rotation of lowering the tip end of the arm unit 131 (relatively bringing the cutting mechanism 12 close to the fruit vegetable) occurs. The rotation of the arm unit 131 at this time is also controlled by the arm rotation control unit. Specifically, at least in the initial process in which the arm unit 131 extends, the tail portion 132a rotates the arm unit 131 while being in contact with the tail guide 138, thereby preventing rapid rotation of the arm unit 131.

Here, the rail of the tail guide 138 is arranged to be lifted from the back side to the front side. While the arm unit 131 is extending, the arm cover 132 also moves forward as the second divided arm 131B moves. Then, when the arm cover 132 moves forward, the tail portion 132a moves along the tail guide 138. This allows rotation of lifting up the back end of the arm unit 131, that is, rotation of lowering the tip end of the arm unit 131.

As described above, in the advance and retreat mechanism 13, the rotation operation of the arm unit 131 occurs along with the extension and contraction operation of the arm unit 131. Therefore, the extension and contraction operation of the arm unit 131 moves the cutting mechanism 12 forward, and the rotation operation of the arm unit 131 lowers the cutting mechanism 12 toward the fruit vegetable F held by the suction pad 110. At this time, the cutting mechanism 12 also rotates about the second rotation shaft 130B to incline the tip end side of the cutting mechanism 12 so as to lower the tip end side. By such a combined operation (the extension and contraction operation and rotation operation of the arm unit 131 and the inclination operation of the cutting mechanism 12), it is possible to bring a bottom surface portion of the cutting mechanism 12 into contact with the fruit vegetable F from above. Fig. 4B illustrates a contact position immediately after the cutting mechanism 12 comes into contact with the fruit vegetable F.

When the drum unit 135 is further rotated forward from the contact position in Fig. 4B, the arm unit 131 further extends. At this time, the cutting mechanism 12 moves along the fruit vegetable F while the bottom surface portion is being in contact with the fruit vegetable F and finally reaches a cutting position in Fig. 4C. At the cutting position in Fig. 4C, the cutting mechanism 12 reaches the stalk of the fruit vegetable F, is operated to cut the stalk, and thus can separate the fruit vegetable F from the branch.

In the above operation, the combined operation including the extension and contraction operation and rotation operation of the arm unit 131 and the inclination operation of the cutting mechanism 12 can prevent the cutting mechanism 12 moved by the advance and retreat mechanism 13 from stabbing the fruit vegetable F. After the cutting mechanism 12 comes into contact with the fruit vegetable F, the cutting mechanism 12 can move along the fruit vegetable F and can cut the stalk at an optimal position close to the fruit vegetable F in accordance with a difference in size and unevenness of the fruit vegetable F. Further, the above combined operation is performed by using only the rotary actuator 134 as a drive source. This is advantageous not only in simplifying the configuration of the fruit vegetable harvesting device 10 but also in reducing a cost.

The lowering operation of the arm unit 131 may be caused by gravity, but may be more reliably caused by an elastic member such as a spring. That is, the lowering operation of the arm unit 131 can be caused by gravity if the advance and retreat mechanism 13 is located above the fruit vegetable holding mechanism 11 as a basic posture when the fruit vegetable harvesting device 10 is in use. However, depending on the posture of the fruit vegetable harvesting device 10 in use, gravity may not act in a direction causing the lowering operation of the arm unit 131. In such a case, when the lowering operation of the arm unit 131 is performed by using biasing force of the elastic member, it is possible to perform the above combined operation, regardless of the posture of the fruit vegetable harvesting device 10 in use. The elastic member used in this case may be any elastic member as long as the elastic member generates a biasing force for lowering the tip end of the arm unit 131 about the first rotation shaft 130A with respect to the arm unit 131, and the kind of elastic member to be used is not particularly limited.

A position of the stalk of the fruit vegetable F held by the suction pad 110 varies depending on the size of the fruit vegetable F and the holding posture of the fruit vegetable F with respect to the suction pad 110. That is, the position of the stalk may be close to or far from a tip end of the suction pad 110. Therefore, an amount of extension of the arm unit 131 in the advance and retreat mechanism 13 is required to have a sufficient length to reach the stalk even in a case where the position of the stalk is far. Meanwhile, in a case where the position of the stalk is close, when the arm unit 131 is further extended after the cutting mechanism 12 abuts on the stalk, the tip end of the cutting mechanism 12 may be excessively inclined to damage the fruit vegetable, or blades of the cutting mechanism 12 may be damaged by excessive force.

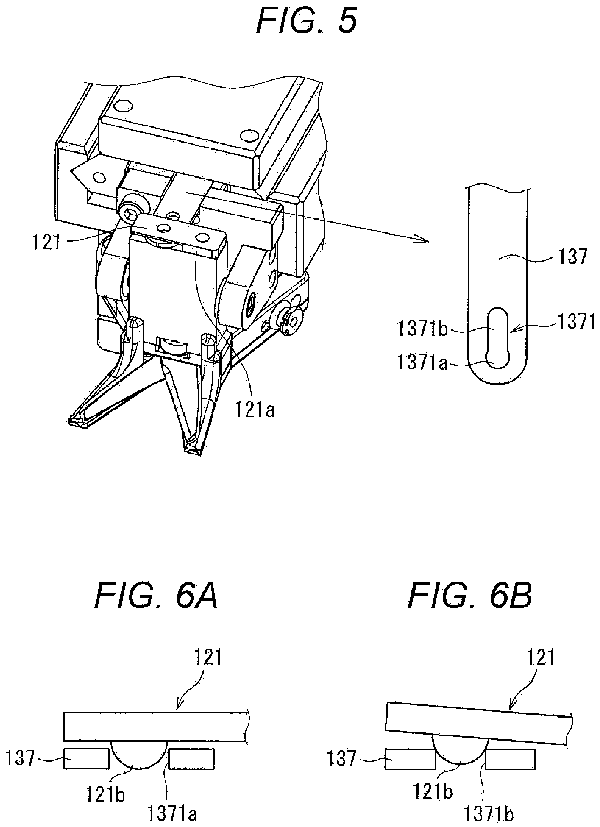

Therefore, the cutting mechanism 12 and the cutting mechanism belt 137 are preferably connected via a load reduction unit. Fig. 5 is an enlarged perspective view of an example of the load reduction unit. Figs. 6A and 6B are explanatory diagrams of an action of the load reduction unit.

As illustrated in Fig. 5, the load reduction unit includes an engagement hole 1371 formed at a tip end of the cutting mechanism belt 137 and a leaf spring 121 attached to an upper surface of the cutting mechanism 12. The engagement hole 1371 penetrates the cutting mechanism belt 137 in a thickness direction thereof and has a fitting portion (fitting groove) 1371a and a relief portion (relief groove) 1371b. Specifically, the fitting portion 1371a has a substantially circular shape in plan view, and the relief portion 1371b is connected to the fitting portion 1371a so as to extend to a longitudinal back side of the cutting mechanism belt 137. The width (lateral width) of the relief portion 1371b is smaller than an inner diameter of the fitting portion 1371a.

An attachment piece 121a for attaching the leaf spring 121 to the cutting mechanism 12 is provided on a base end side of the leaf spring 121 so as to protrude from a bottom surface thereof, and a hemispherical protrusion 121b (see Fig. 6) is provided on a tip end side of the leaf spring 121 so as to protrude from the bottom surface. An outer diameter of the protrusion 121b is set to be larger than the width of the relief portion 1371b of the engagement hole 1371 and to be substantially equal to the inner diameter of the fitting portion 1371a. **In** the leaf spring 121 configured as described above, the attachment piece 121a is fixed to the top of the cutting mechanism 12, and the protrusion 121b provided at the tip end serving as a free end is fitted into the engagement hole 1371 of the cutting mechanism belt 137. The shape of the protrusion 121b is not limited to a hemispherical shape and can be arbitrarily changed in design, and the shapes and sizes of the fitting portion 1371a and the relief portion 1371b can also be appropriately changed in design accordingly.

Fig. 6A illustrates a state in which the protrusion 121b of the leaf spring 121 is fitted into the fitting portion 1371a of the engagement hole 1371. At this time, the protrusion 121b is pressed against the fitting portion 1371a by a spring action of the leaf spring 121. **In** this state, when the cutting mechanism belt 137 advances by the forward rotation of the drum unit 135, it is possible to transmit force from the cutting mechanism belt 137 to the cutting mechanism 12 via the fitting between the protrusion 121b and the fitting portion 1371a, thereby causing the cutting mechanism 12 to perform the inclination operation.

Meanwhile, in a case where the drum unit 135 is further rotated forward in a state in which the cutting mechanism 12 abuts on the stalk and cannot further advance, a large pressing force is generated in the fitting portion between the protrusion 121b and the fitting portion 1371a, and the protrusion 121b is lifted by the pressing force against spring biasing force and is then placed on the relief portion 1371b as illustrated in Fig. 6B. Even in a case where the cutting mechanism belt 137 advances due to the forward rotation of the drum unit 135 while the protrusion 121b is being placed on the relief portion 1371b, the force cannot be transmitted from the cutting mechanism belt 137 to the cutting mechanism 12. This makes it possible to reduce the load applied to the cutting mechanism 12 and also to prevent the cutting mechanism 12 from being unnecessarily inclined.

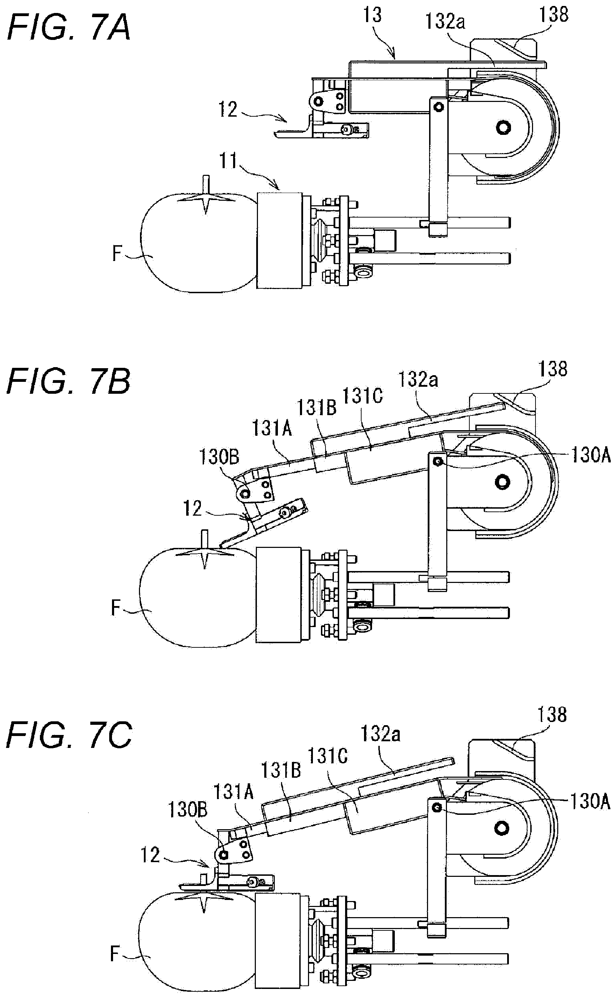

Figs. 7A to 7C illustrate an operation of the fruit vegetable harvesting device 10 at the time of harvesting a fruit vegetable and illustrate a different operation example from that of Figs. 4A to 4C. In the example of Figs. 7A to 7C, the posture of the fruit vegetable F held by the fruit vegetable holding mechanism 11 is different from that in the example of Figs. 4A to 4C, and the position of the stalk is close to the fruit vegetable holding mechanism 11. Therefore, the cutting mechanism 12 abuts on the stalk at a timing earlier than that in the example of Figs. 4A to 4C, and the inclination of the cutting mechanism 12 is restrained by the action of the load reduction unit. This makes it possible to appropriately arrange the cutting mechanism 12 along the surface of the fruit vegetable F.

The above load reduction unit is provided at a connection portion between the cutting mechanism 12 and the cutting mechanism belt 137 as an example, and a similar load reduction unit can also be provided at a connection portion between the first divided arm 131A and the first belt 136A and/or a connection portion between the second divided arm 131B and the second belt 136B. In this case, when the drum unit 135 is further rotated forward in a state in which the cutting mechanism 12 abuts on the stalk and cannot further advance, it is possible to prevent the arm unit 131 from further extending and also to prevent the cutting mechanism 12 from being unnecessarily pressed against the stalk.

The fruit vegetable harvesting device 10 including the above load reduction unit does not need to perform control to detect abutting of the cutting mechanism 12 on the stalk by using a sensor or the like and stop the drum unit 135 on the basis of the detection. This is advantageous not only in simplifying rotation control of the drum unit 135 but also in reducing a cost of the fruit vegetable harvesting device 10.

### [Second Embodiment]

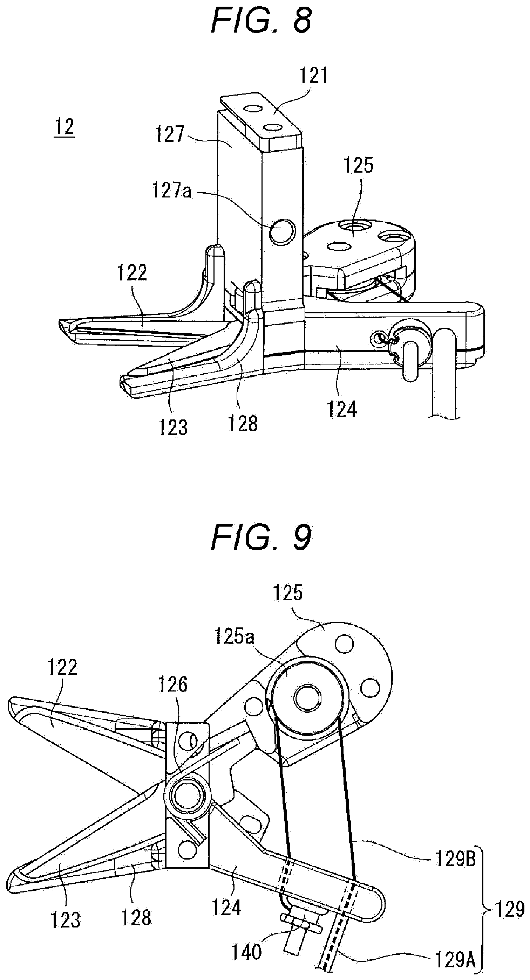

**In** a second embodiment, a specific configuration example of the cutting mechanism 12 will be described. Fig. 8 is a perspective view of an appearance of the cutting mechanism 12. Fig. 9 is a plan view of the cutting mechanism 12. Fig. 9 does not illustrate an attachment member 127 in Fig. 8 and illustrates a cross-section of the inside of a movable member 125.

As illustrated in Figs. 8 and 9, the cutting mechanism 12 according to the second embodiment is provided as scissors having a pair of cutting blades of which blade portions are arranged to face each other. That is, the cutting mechanism 12 includes a first blade member 122 serving as a stationary blade and a second blade member 123 serving as a moving blade. A fixing member 124 is attached to the first blade member 122 on the side opposite to the blade portion, and the movable member 125 is attached to the second blade member 123 on the side opposite to the blade portion. The movable member 125 is provided with a pulley 125a having a rotation axis in a direction orthogonal to opening and closing surfaces of the scissors. A spring 126 is arranged between the fixing member 124 and the movable member 125, and the spring 126 applies a biasing force in a direction in which the scissors open.

The attachment member 127 is fixedly attached to an upper surface of the fixing member 124 so as to stand thereon. The attachment member 127 has a shaft hole 127a for allowing the second rotation shaft 130B to pass therethrough, near the center in a longitudinal direction of the attachment member 127. The leaf spring 121 is attached to an upper end of the attachment member 127 (an end portion opposite to a portion connected to the fixing member 124). In a case where the above load reduction unit is not provided, the cutting mechanism belt 137 may be directly attached to the upper end of the attachment member 127.

A blade cover 128 may be provided on the blade portions side of the first blade member 122 and the second blade member 123. The blade cover 128 is a resin cover arranged to cover bottom surfaces (surfaces facing a fruit vegetable) of the first blade member 122 and the second blade member 123 and protects the fruit vegetable from being damaged when the cutting mechanism 12 comes into contact with the fruit vegetable. In particular, when tip ends of the blade cover 128 have a shape like a ski board (a shape warped upward), it is possible to prevent the blades from stabbing the fruit vegetable at the moment when the blades come into contact with the fruit vegetable.

In the cutting mechanism 12, driving force for closing the scissors is transmitted from the outside via a wire member 129. The wire member 129 has a double structure of an outer wire 129A and an inner wire 129B like brake wires of a bicycle, for example. The outer wire 129A is attached outside the fixing member 124 (on the side opposite to the movable member 125). The inner wire 129B is attached to be wound around the pulley 125a, and a tip end of the inner wire 129B is connected to the inside of the fixing member 124. That is, the inner wire 129B is wound around the pulley 125a provided on the moving blade side of the scissors, and the tip end of the inner wire 129B is connected to the stationary blade side of the scissors. In the example of Fig. 9, the tip end of the inner wire 129B is connected to a tensioner 140 provided on the stationary blade side of the scissors, and thus it is possible to adjust the length of the inner wire 129B (i.e., a tension generated when the inner wire 129B is pulled) by operating the tensioner 140.

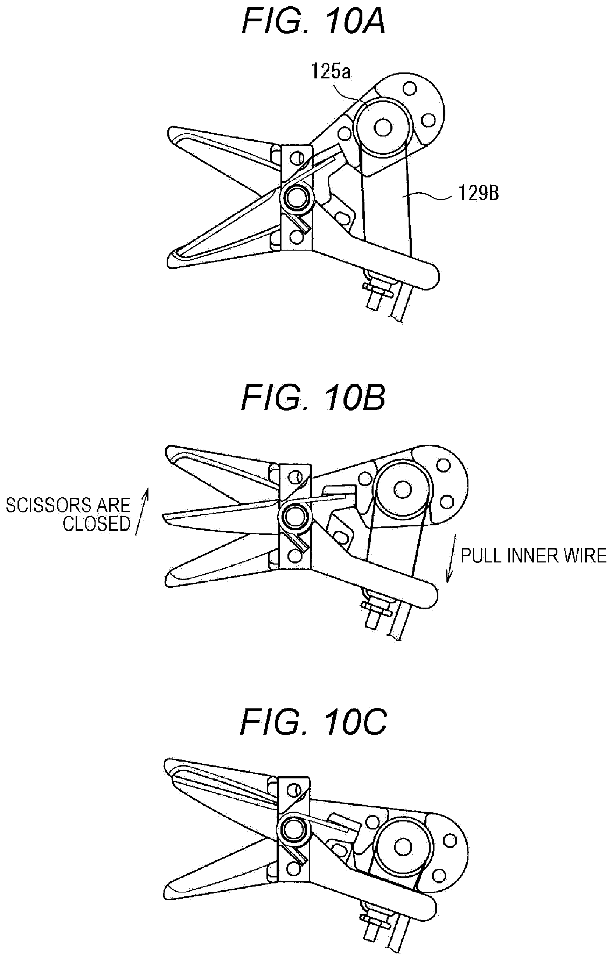

Figs. 10A to 10C are explanatory diagrams of an operation of the cutting mechanism 12. Fig. 10A illustrates the initial state of the cutting mechanism 12, and, in this state, the scissors are open due to the biasing force of the spring 126.

In order to close the scissors in the cutting mechanism 12, the inner wire 129B is pulled by a drive source (e.g., air cylinder or motor) connected to the other end side (an end portion on the side not illustrated) of the wire member 129. When the inner wire 129B is pulled, the pulley 125a functions as a moving pulley, and the scissors can be closed as illustrated in Figs. 10B and 10C. When the pulling force of the inner wire 129B is relieved, the scissors can be opened again by the action of the spring 126.

By using the pulley 125a as the moving pulley as described above, it is possible to reduce the driving force for closing the scissors, and a thin wire having a small allowable stress can be used as the inner wire 129B. The thin wire has a small minimum bending radius, and thus the cutting mechanism 12 can be reduced in size. The inner wire 129B is preferably a polymeric yarn. The polymeric yarn has a smaller minimum bending radius at the same tensile strength than a metal wire, and thus the pulley 125a can be made smaller by using the polymeric yarn as the inner wire 129B. This makes it possible to reduce the size of the entire cutting mechanism 12.

The cutting mechanism 12 according to the present embodiment is connected to an external drive source via the wire member 129, and thus the drive source can be separated from the cutting mechanism 12. Therefore, the cutting mechanism 12 itself can be reduced in size. This makes it possible to easily insert the cutting mechanism 12 into dense fruit vegetables.

The embodiments disclosed herein are illustrative in all respects and do not provide a basis for a limited interpretation. Therefore, the technical scope of the present invention is defined by descriptions in the claims, not only by the above embodiments. Further, the present invention encompasses all modifications when falling under the scope of the appended claims.

For example, in the fruit vegetable harvesting device 10 described above, the cutting mechanism 12 that is scissors is attached to the tip end of the arm unit 131, but an operating tool other than the cutting mechanism 12 may be attached to the tip end of the arm unit 131. Such an operating tool is a tool for operating fruit vegetables, and the operating tool other than the cutting mechanism 12 may be, for example, a tool for picking a fruit vegetable from a stalk by a method other than cutting (e.g., the finger portion disclosed in Patent Document 1) or a tool for covering a fruit vegetable with a bag.

### LIST OF REFERENCE SIGNS

- 10: Fruit vegetable harvesting device (Crop operating device)
- 11: Fruit vegetable holding mechanism (Crop holding mechanism)
- 110: Suction pad
- 12: Cutting mechanism (Operating tool)
- 121: Leaf spring (Load reduction unit)
- 121a: Attachment piece
- 121b: Protrusion
- 122: First blade member
- 123: Second blade member
- 124: Fixing member
- 125: Movable member
- 125a: Pulley
- 126: Spring
- 127: Attachment member
- 127a: Shaft hole
- 128: Blade cover
- 129: Wire member
- 129A: Outer wire
- 129B: Inner wire
- 13: Advance and retreat mechanism
- 130: Frame member
- 130A: First rotation shaft
- 130B: Second rotation shaft
- 131: Arm unit
- 131A: First divided arm
- 131B: Second divided arm
- 131C: Third divided arm
- 132: Arm cover (Arm rotation control unit)
- 132a: Tail portion
- 133: Drum cover
- 134: Rotary actuator (Drive unit)
- 135: Drum unit (Drive unit)
- 135A: Large-diameter drum
- 135B: Medium-diameter drum
- 135C: Small-diameter drum
- 136A: First belt (Drive unit)
- 136B: Second belt (Drive unit)
- 137: Cutting mechanism belt (Drive unit)
- 1371: Engagement hole (Load reduction unit)
- 1371a: Fitting portion (Fitting groove)
- 1371b: Relief portion (Relief groove)
- 138: Tail guide (Arm rotation control unit)

## Claims

1. A crop operating device (10) comprising:
an operating tool (12) that operates a crop;
a crop holding mechanism (11) that holds the crop;
an advance and retreat mechanism (13) that advances and retracts the operating tool (12) to and from the crop held by the crop holding mechanism (11), and
a drive unit (134, 135, 136A, 136B, 137) that drives the advance and retreat mechanism (13) and the operating tool (12),
wherein the operating tool (12) is held to be rotatable with respect to the advance and retreat mechanism (13),
**characterized in that** the drive unit (134, 135, 136A, 136B, 137) includes a plurality of drums (135A, 135B, 135C) having different diameters and fixed to a same drive shaft.

2. The crop operating device according to claim 1, wherein
the advance and retreat mechanism includes an extendable arm unit (131) to which the operating tool is attached.

3. The crop operating device (10) according to claim 2, wherein
the arm unit (131) is supported to be rotatable with respect to a frame member (130) of the advance and retreat mechanism (13), and
the crop operating device (10) further comprises an arm rotation control unit (132, 138) that restricts rotation of the arm unit (131) at an initial stage in which the arm unit (131) starts to extend and allows the rotation of the arm unit (131) as the arm unit (131) extends.

4. The crop operating device (10) according to claim 3, further comprising
an elastic member that biases the arm unit (131) in a rotation direction in which the operating tool (12) is relatively brought close to the crop with respect to the arm unit (131).

5. The crop operating device (10) according to claim 2, wherein
the arm unit (131) includes a plurality of divided arms.

6. The crop operating device (10) according to claim 5, wherein
a first divided arm (131A) that is located at a head of the divided arms when the arm unit (131) extends holds the operating tool (12) so that the operating tool (12) is rotatable, and
a first drum (135A) of the plurality of drums is connected to the operating tool (12) via a first belt (137) and a second drum (135B, 135C) of the plurality of drums is connected to the first divided arm (131A) via a second belt (136A, 136B), wherein the first and second drums have different drum diameters.

7. The crop operating device (10) according to claim 6, further comprising
a load reduction unit including a leaf spring (121) of which one end portion is fixed to the operating tool (12) or the first divided arm and another end portion serving as a free end has a protrusion (121b) protruding toward the first belt (137).

8. The crop operating device (10) according to claim 7, wherein
the load reduction unit has:
a fitting groove (1371a) formed in the belt and having a shape fittable into the protrusion (121b); and
a relief groove (1371b) formed adjacent to the fitting groove (1371a) so as to extend in a longitudinal direction of the belt and having a groove width smaller than a width dimension of the protrusion (121b).

9. The crop operating device (10) according to any one of claims 1 to 8, wherein
the operating tool (12) is a cutting mechanism that cuts a stalk of the crop,
the cutting mechanism includes scissors having a pair of cutting blades of which blade portions are arranged to face each other.

10. The crop operating device (10) according to claim 9, wherein
in the cutting mechanism, a biasing force for opening the scissors is applied by a spring (126), and a driving force for closing the scissors is transmitted via a wire member (129) having a double structure including an outer wire and an inner wire.

11. The crop operating device (10) according to claim 10, wherein
a moving pulley (125A) is provided on one blade side of the scissors, and
the inner wire is wound around the moving pulley, and a tip end of the inner wire is connected to another blade side of the scissors.

12. The crop operating device (10) according to any one of claims 9 to 11, wherein
a blade cover (128) is provided on the blade portions side of the scissors, and the blade cover (128) covers surfaces, facing the crop, of the scissors.

## Patentansprüche

1. Erntefruchthandhabungsvorrichtung (10), umfassend:
ein Handhabungswerkzeug (12), das eine Erntefrucht handhabt;
ein Erntefruchthaltemechanismus (11), der die Erntefrucht hält;
einen Vorrück- und Rückzugsmechanismus (13), der das Handhabungswerkzeug (12) zu der von dem Erntefruchhaltemechanismus (11) gehaltenen Erntefrucht vorrückt und von dieser zurückzieht, und
eine Antriebseinheit (134, 135, 136A, 136B, 137), die den Vorrück- und Rückzugsmechanismus (13) und das Handhabungswerkzeug (12) antreibt,
wobei das Handhabungswerkzeug (12) so gehalten wird, dass es in Bezug auf den Vorrück- und Rückzugsmechanismus (13) drehbar ist,
**gekennzeichnet dadurch, dass** die Antriebseinheit (134, 135, 136A, 136B, 137) eine Vielzahl von Trommeln (135A, 135B, 135C) beinhaltet, die unterschiedliche Durchmesser aufweisen und an einer gleichen Antriebswelle befestigt sind.

2. Erntefruchthandhabungsvorrichtung nach Anspruch 1, wobei
der Vorrück- und Rückzugsmechanismus eine verlängerbare Armeinheit (131) beinhaltet, an der das Handhabungswerkzeug angebracht ist.

3. Erntefruchthandhabungsvorrichtung (10) nach Anspruch 2, wobei
die Armeinheit (131) so getragen ist, dass sie in Bezug auf ein Rahmenelement (130) des Vorrück- und Rückzugsmechanismus (13) drehbar ist, und
die Erntefruchthandhabungsvorrichtung (10) ferner eine Armdrehungsteuereinheit (132, 138) umfasst, die eine Drehung der Armeinheit (131) in einem Anfangsstadium, in dem die Armeinheit (131) sich zu verlängern beginnt, einschränkt und die Drehung der Armeinheit (131) zulässt, wenn sich die Armeinheit (131) verlängert.

4. Erntefruchthandhabungsvorrichtung (10) nach Anspruch 3, ferner umfassend
ein elastisches Element, das die Armeinheit (131) in einer Drehungsrichtung vorspannt, in der das Handhabungswerkzeug (12) in Bezug auf die Armeinheit (131) relativ nahe an die Erntefrucht gebracht wird.

5. Erntefruchthandhabungsvorrichtung (10) nach Anspruch 2, wobei
die Armeinheit (131) eine Vielzahl von geteilten Armen beinhaltet.

6. Erntefruchthandhabungsvorrichtung (10) nach Anspruch 5, wobei
ein erster geteilter Arm (131A), der sich an einem Kopf des geteilten Arms befindet, wenn sich die Armeinheit (131) verlängert, das Handhabungswerkzeug (12) so hält, dass das Handhabungswerkzeug (12) drehbar ist, und
eine erste Trommel (135A) der Vielzahl von Trommeln mit dem Handhabungswerkzeug (12) über einen ersten Riemen (137) verbunden ist und eine zweite Trommel (135B, 1350) der Vielzahl von Trommeln mit dem ersten geteilten Arm (131A) über einen zweiten Riemen (136A, 136B) verbunden ist, wobei die erste und die zweite Trommel unterschiedliche Trommeldurchmesser aufweisen.

7. Erntefruchthandhabungsvorrichtung (10) nach Anspruch 6, ferner umfassend
eine Lastreduzierungseinheit, die eine Blattfeder (121) beinhaltet, von der ein Endabschnitt an dem Handhabungswerkzeug (12) oder dem ersten geteilten Arm befestigt ist und ein anderer Endabschnitt, der als freies Ende dient, einen Überstand (121b) aufweist, der zu dem ersten Riemen (137) hin übersteht.

8. Erntefruchthandhabungsvorrichtung (10) nach Anspruch 7, wobei
die Lastreduzierungseinheit Folgendes aufweist:
eine Passnut (1371a), die in dem Riemen ausgebildet ist und eine Form aufweist, die in den Überstand (121b) einpassbar ist; und
eine Entlastungsnut (1371b), die benachbart zu der Passnut (1371a) ausgebildet ist, um sich so in eine Längsrichtung des Riemens zu verlängern, und die eine Nutbreite aufweist, die kleiner als eine Breitendimension des Überstands (121b) ist.

9. Erntefruchthandhabungsvorrichtung (10) nach einem der Ansprüche 1 bis 8,
wobei
das Handhabungswerkzeug (12) ein Schneidemechanismus ist, der einen Stängel von der Erntefrucht schneidet,
wobei der Schneidemechanismus eine Schere beinhaltet, die ein Paar Schneidklingen aufweist,
von denen Klingenabschnitte so angeordnet sind, dass sie einander zugewandt sind.

10. Erntefruchthandhabungsvorrichtung (10) nach Anspruch 9, wobei
in dem Schneidemechanismus eine Vorspannkraft zum Öffnen der Schere durch eine
Feder (126) angewendet wird und eine Antriebskraft zum Schließen der Schere über ein Drahtelement (129) übertragen wird, das eine Doppelstruktur aufweist, die einen Außendraht und einen Innendraht beinhaltet.

11. Erntefruchthandhabungsvorrichtung (10) nach Anspruch 10,
wobei
eine bewegliche Riemenscheibe (125A) auf einer Klingenseite der Schere bereitgestellt ist, und
der Innendraht um die bewegliche Riemenscheibe gewickelt ist und ein Spitzenende des Innendrahts mit einer anderen Klingenseite der Schere verbunden ist.

12. Erntefruchthandhabungsvorrichtung (10) nach einem der Ansprüche 9 bis 11,
wobei
eine Klingenabdeckung (128) an der Seite der Klingenabschnitte der Schere bereitgestellt ist, und die Klingenabdeckung (128) der Erntefrucht zugewandte Flächen der Schere abdeckt.

## Revendications

1. Dispositif d'opération sur une culture (10) comprenant :
un outil d'opération (12) qui effectue une opération sur une culture ;
un mécanisme de maintien de culture (11) qui maintient la culture ;
un mécanisme d'avance et de retrait (13) qui avance et rétracte l'outil d'opération (12) vers et depuis la culture maintenue par le mécanisme de maintien de culture (11), et
une unité d'entraînement (134, 135, 136A, 136B, 137) qui entraîne le mécanisme d'avance et de retrait (13) et l'outil d'opération (12),
dans lequel l'outil d'opération (12) est maintenu de manière à pouvoir tourner par rapport
au mécanisme d'avance et de retrait (13),
**caractérisé en ce que** l'unité d'entraînement (134, 135, 136A, 136B, 137) inclut une pluralité de tambours (135A, 135B, 135C) de diamètres différents et fixés à un même arbre d'entraînement.

2. Dispositif d'opération sur une culture selon la revendication 1, dans lequel
le mécanisme d'avance et de retrait inclut une unité de bras (131) extensible à laquelle l'outil d'opération est relié.

3. Dispositif d'opération sur une culture (10) selon la revendication 2, dans lequel
l'unité de bras (131) est supportée de manière à pouvoir tourner par rapport à un élément de cadre (130) du mécanisme d'avance et de retrait (13), et
le dispositif d'opération sur une culture (10) comprend en outre une unité de commande de rotation du bras (132, 138) qui restreint la rotation de l'unité de bras (131) à un stade initial au cours duquel l'unité de bras (131) commence à s'étendre et permet la rotation de l'unité de bras (131) à mesure que l'unité de bras (131) s'étend.

4. Dispositif d'opération sur une culture (10) selon la revendication 3, comprenant en outre
un élément élastique qui sollicite l'unité de bras (131) dans une direction de rotation dans laquelle l'outil d'opération (12) est relativement rapproché de la culture par rapport à l'unité de bras (131).

5. Dispositif d'opération sur une culture (10) selon la revendication 2, dans lequel
l'unité de bras (131) inclut une pluralité de bras divisés.

6. Dispositif d'opération sur une culture (10) selon la revendication 5, dans lequel
un premier bras divisé (131A) qui est situé en tête des bras divisés lorsque l'unité de bras (131) s'étend, maintient l'outil d'opération (12) de manière à ce que l'outil d'opération (12) puisse tourner, et
un premier tambour (135A) de la pluralité de tambours est connecté à l'outil d'opération (12) via une première courroie (137) et un deuxième tambour (135B, 1350) de la pluralité de tambours est connecté au premier bras divisé (131A) via une deuxième courroie (136A, 136B), dans lequel les premier et deuxième tambours ont des diamètres de tambour différents.

7. Dispositif d'opération sur une culture (10) selon la revendication 6, comprenant
en outre
une unité de réduction de charge incluant un ressort à lames (121) dont une partie d'extrémité est fixée à l'outil d'opération (12) ou au premier bras divisé et dont une autre partie d'extrémité, servant d'extrémité libre, présente une saillie (121b) s'étendant vers la première courroie (137).

8. Dispositif d'opération sur une culture (10) selon la revendication 7, dans lequel
l'unité de réduction de charge présente :
une rainure d'emboîtement (1371a) formée dans la courroie et présentant une forme pouvant s'emboîter dans la saillie (121b) ; et
une rainure de dégagement (1371b) formée à proximité de la rainure d'emboîtement (1371a) de manière à s'étendre dans une direction longitudinale de la courroie et présentant une largeur de rainure inférieure à la dimension de largeur de la saillie (121b).

9. Dispositif d'opération sur une culture (10) selon l'une quelconque des revendications 1 à 8, dans lequel
l'outil d'opération (12) est un mécanisme de coupe qui coupe une tige de la culture,
le mécanisme de coupe inclut des ciseaux présentant une paire de lames de coupe
dont les parties de lame sont disposées face à face.

10. Dispositif d'opération sur une culture (10) selon la revendication 9, dans lequel dans le mécanisme de coupe, une force de sollicitation pour ouvrir les ciseaux est appliquée par
un ressort (126), et une force d'entraînement pour fermer les ciseaux est transmise via un élément de câble (129) présentant une structure double incluant un câble externe et un câble interne.

11. Dispositif d'opération sur une culture (10) selon la revendication 10, dans lequel
une poulie mobile (125A) est prévue sur un côté de lame des ciseaux, et
le câble interne est enroulé autour de la poulie mobile, et une extrémité terminale du câble interne est connectée à un autre côté de lame des ciseaux.

12. Dispositif d'opération sur une culture (10) selon l'une quelconque des revendications 9 à 11, dans lequel
un couvre-lame (128) est prévu sur le côté des parties de lame des ciseaux, et le couvre-lame (128) recouvre les surfaces, orientées vers la culture, des ciseaux.
